# FASCICULE DE BREVET EUROPEEN

(11) **EP 1 127 671 B1**
(45) Date de publication et mention de la délivrance du brevet: **10.11.2004**
(21) Numéro de dépôt: 01400278.6
(22) Date de dépôt: 05.02.2001
(51) Int. Cl.: B29C 45/00, F21V 7/22

(54) **Procédé de fabrication de pièces optiques pour dispositifs d'éclairage ou de signalisation de véhicules automobiles**
Verfahren zur Herstellung von optischen Teilen für Fahrzeugbeleuchtungs- oder Fahrzeugsignalisierungsvorrichtungen
Method for producing optical parts for motor vehicle illumination or signalisation devices

(30) Priorité: 28.02.2000 FR 0002440
(43) Date de publication de la demande: 29.08.2001
(73) Titulaire: VALEO VISION, 93012 Bobigny Cédex (FR)
(72) Inventeur: Ortiz, José, 93012 Bobigny Cedex (FR)

(56) Documents cités:
- EP-A- 0 239 036
- EP-A- 0 630 955
- EP-A- 1 066 946
- DE-A- 19 641 162

## Description

La présente invention concerne le domaine de la fabrication de pièces optiques pour l'éclairage ou la signalisation de véhicules automobiles, ainsi que pour l'éclairage en général (domestique, industriel, urbain, etc.).

De manière plus précise, la présente invention concerne un procédé de fabrication de telles pièces optiques par injection, en une seule étape, dans un moule, d'une composition polymère à l'état fondu.

Pour la fabrication de pièces optiques ou de pièces d'aspect, telles que des miroirs ou des masques, etc., on utilise pour la mise en oeuvre de tels procédés des polymères thermoplastiques ou thermodurcissables.

D'une manière générale, les pièces obtenues par la mise en oeuvre de l'un de ces procédés connus présentent de nombreux inconvénients. En particulier, selon le procédé d'injection mis en oeuvre et la composition polymère utilisée, on observe le plus souvent un effet de dégazage du polymère constitutif de ces pièces et/ou des additifs utilisés.

Les vapeurs de dégazage se condensent ensuite sur les parties les plus froides des différentes pièces optiques d'éclairage, de réflexion ou de transmission de la lumière. Par exemple, dans les projecteurs, les vapeurs de dégazage issues des miroirs réalisés par injection de résines polymères vont se condenser sur les glaces de ces projecteurs. Cette condensation produit, à la surface de ces pièces, un ternissement ou une irisation, tout à fait indésirable aussi bien en ce qui concerne l'esthétique du projecteur que ses performances photométriques. Ce phénomène est souvent appelé selon la terminologie anglo-saxonne « fogging ».

Corrélativement, le dégazage s'accompagne de la migration vers l'extérieur des produits volatils, par exemple des additifs, et d'une dégradation du polymère principal, ce qui implique un vieillissement prématuré des pièces et la diminution de la résistance mécanique de celles-ci.

Pour améliorer les propriétés mécaniques des pièces obtenues, ces polymères sont généralement chargés, par exemple avec des charges minérales et/ou des charges fibreuses telles que des fibres de verre. Mais l'état de surface ou l'aspect des pièces ainsi obtenues n'est pas satisfaisant, notamment en ce qui concerne leur brillance, en particulier pour une utilisation de ces pièces en tant que miroirs.

Pour remédier à ce type d'inconvénients, il est nécessaire d'avoir recours à des techniques relativement complexes telles que la technique d'injection/moulage « bi-matière », par laquelle on injecte successivement une matière thermoplastique pour former une peau ayant de bonnes propriétés de surface, puis une matière thermodurcissable ou thermoplastique chargée pour former une âme ayant de bonnes propriétés mécaniques (voir par exemple les brevets français FR-A-2 758 128 et FR-A-2 643 849).

Une autre solution consiste à améliorer l'état de surface de pièces injectées avec certains thermoplastiques chargés, par mélange d'une faible quantité (10 à 15% en poids) de polytéréphtalate d'éthylène à ces thermoplastiques.

On connaît par exemple du document EP-B-0 630 955 une composition de résine polyester contenant des charges, notamment des charges d'aluminium, et du document EP-A-0 947 763 un réflecteur qui nécessite une couche de matériau polyimide ou polyamide aromatique déposée sous vide, dans le but d'améliorer les propriétés réfléchissantes. D'autres formulations sont disponibles sur le marché et contiennent des additifs liquides ou en solution (à la température ambiante), ou des composants solides, mais dont la tension de vapeur à la température d'utilisation engendre un problème de dégazage avec condensation dans les zones les plus froides.

On connaît également pour une utilisation dans le domaine de l'éclairage des copolyesters aromatiques du type polymère à cristal liquide (LCP ou Liquid Crystal Polymer) qui contiennent des charges minérales permettant d'améliorer leurs propriétés mécaniques du produit fini. Cependant, les différentes qualités de LCP contenant des charges et disponibles sur le marché ne permettent pas d'obtenir les mêmes performances en réflexion qu'un réflecteur réalisé par exemple en un matériau thermodurcissable, tel qu'un BMC (Bulk Moulding Compound ou Thermodur) ou une résine époxyde, ou en métal (tôle ou alliage) muni d'un vernis avant métallisation, ou encore en un thermoplastique amorphe sans charge, par exemple en Polyether imide (PEI), en Poly carbonate (PC), en Polyether Sulfone (PES), tout en ayant les propriétés mécaniques et thermiques requises dans ce type d'application.

Encore une autre solution pour améliorer l'état de surface de certains polymères chargés consiste à déposer sur les surfaces à protéger un vernis ou une couche de préparation (dépôt de polymère sous vide) avant d'appliquer une couche métallique réfléchissante. Une telle couche de préparation, constituée d'un vernis, est connue dans la technique sous le nom de « primer ». Un choix judicieux de vernis ou du dépôt de polymère permet en outre de limiter les phénomènes de dégazage de la matrice polymère.

La présente invention se place dans ce contexte et elle a pour but de proposer un procédé de réalisation de pièces optiques
- ne subissant pas le phénomène de dégazage, ou un très faible dégazage,
- dont l'état de surface ne nécessite pas de couche de préparation avant la métallisation leur conférant par exemple un pouvoir réfléchissant élevé,
- ces pièces optiques ayant par ailleurs les propriétés mécaniques désirées.

La présente invention a donc pour objet un procédé de fabrication de pièces optiques pour dispositifs d'éclairage ou de signalisation de véhicules automobiles, par injection en une seule étape dans un moule d'une composition polymère, qui est une résine polyester polymère à cristal liquide (LCP), comportant les étapes suivantes :
- on chauffe la composition polymère pour qu'elle atteigne une première température prédéterminée d'injection à laquelle elle est à l'état fondu,
- on injecte la composition polymère dans une empreinte formée entre des parois d'un moule,
- on refroidit les parois du moule à une deuxième température prédéterminée de refroidissement,
- on éjecte la pièce moulée et refroidie.

Selon la présente invention, ce but est atteint par le fait que la composition polymère comporte une proportion inférieure à 1% en poids de charges et d'additifs.

Selon un mode de réalisation, la première température prédéterminée d'injection est comprise entre 320 °C et 360 °C.

De préférence, la deuxième température prédéterminée de refroidissement est comprise entre 150 °C et 250 °C.

Dans ce cas, il est avantageux que la deuxième température prédéterminée de refroidissement soit voisine de 220 °C.

Le procédé selon la présente invention permet, directement après l'étape d'éjection de la pièce moulée et refroidie, de procéder à l'étape supplémentaire de métallisation d'une surface de la pièce.

Une telle métallisation peut être réalisée par une évaporation sous vide, par une pulvérisation cathodique, ou par une électrolyse. Dans ce dernier cas, l'électrolyse peut comporter une attaque chimique suivie d'une activation, puis d'un dépôt chimique d'une couche de métallisation, puis d'un dépôt électrolytique d'une ou plusieurs couches de métallisation.

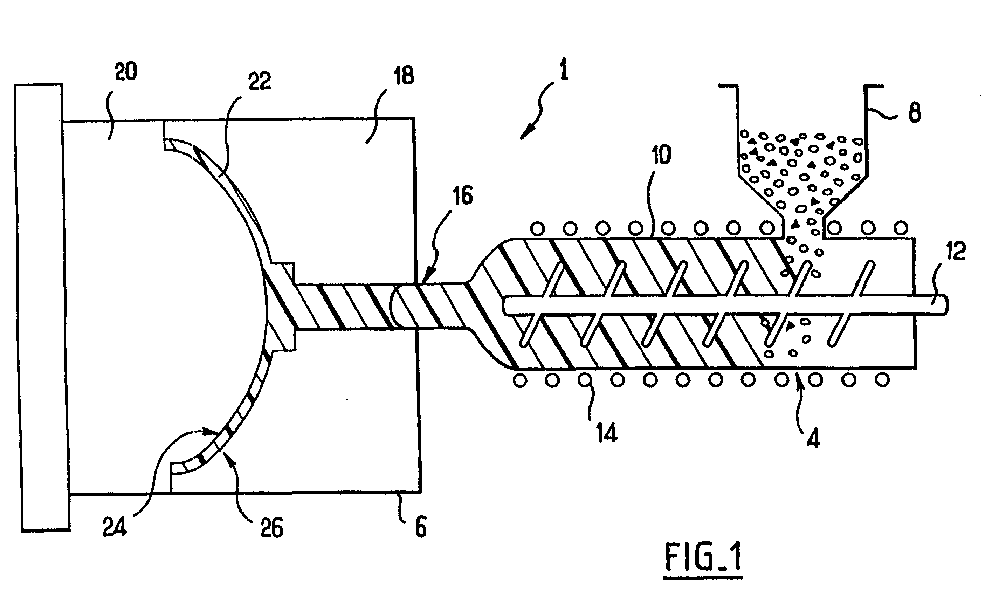

D'autres buts, caractéristiques et avantages de la présente invention ressortiront clairement de la description qui va maintenant être faite d'un exemple de réalisation donné à titre non limitatif en référence aux dessins annexés sur lesquels : la Figure unique représente schématiquement en coupe longitudinale un exemple d'installation d'injection, pressage et moulage, pour la mise en oeuvre du procédé selon la présente invention.

On a représenté sur la Figure unique une installation 1 d'injection, pressage et moulage comprenant un cylindre d'injection 4, un moule 6 et une trémie 8. Le cylindre d'injection 4 comporte principalement un fourreau 10, une vis sans fin 12, des moyens de chauffage 14 et une buse 16.

Une composition polymère à cristal liquide LCP, par exemple disponible dans le commerce sous l'appellation « Thermx LCP LN 001 », essentiellement exempte de charges, minérales ou fibreuses, et d'additifs, est introduite dans la trémie 8 sous forme de granulés, et s'écoule de la trémie 8 dans le fourreau 10, puis est entraînée dans celui-ci grâce à la vis 12. La composition est acheminée dans le fourreau 10 en direction du moule 6. Grâce aux moyens de chauffage 14, disposés sur les parois du fourreau 10, la composition est chauffée et portée à l'état fondu, c'est à dire liquide ou pâteux.

L'expression « essentiellement exempte de charges » signifie que la composition ne comporte pas de charges, ou en comporte dans une proportion très faible, et en tout cas inférieure à 1% en poids.

Le moule comporte un poinçon 18 et une matrice 20. Le poinçon 18 et la matrice 20 sont assemblés de manière à ménager, dans une position particulière et précisément définie, un espace entre eux définissant une empreinte de moulage 22.

Si la matrice 20 est fixe, le poinçon 18 est mobile et inversement. Plus précisément, le poinçon 18 délimite l'empreinte 22 par une face convexe de moulage 24, et la matrice 20 délimite l'empreinte 22 par une face concave de moulage (26).

Au cours d'une étape de remplissage, la composition à l'état fondu est injectée par la buse 16 dans l'empreinte 22. Conformément au procédé selon la présente invention, la température d'injection au niveau du fourreau est comprise entre 320°C et 360 °C. Vient ensuite une étape de refroidissement, pendant laquelle la température de la pièce se rapproche de celle du moule qui est refroidi par un agent réfrigérant à proximité de l'empreinte 22. Selon la présente invention, la température du moule est comprise entre 150 °C et 250 °C. De préférence, la température du moule est voisine de 220 °C. La pièce moulée et refroidie est alors suffisamment rigide pour résister aux efforts de l'éjection, qui peuvent alors intervenir.

Ces conditions de transformation sont telles qu'elles permettent d'avoir une fine peau en résine de polymère à cristal liquide avec un très bon état de surface.

Comme on peut le voir sur la Figure unique, les pièces fabriquées, par exemple des réflecteurs, ont une épaisseur faible par rapport à leur longueur et/ou leur largeur. Typiquement, l'épaisseur de telles pièces est inférieure au millimètre.

Une fois éjectée, la pièce ainsi fabriquée peut être directement métallisée de façon à avoir les propriétés réflectrices voulues, sans qu'il soit besoin de déposer de couche de préparation, telle qu'un « primer » ou une couche polymère déposée sous vide ou par un autre traitement.

Une telle métallisation peut être réalisée selon l'une des technologies utilisées dans la technique, comme par exemple une métallisation par évaporation sous vide, une métallisation par pulvérisation cathodique ou une métallisation par électrolyse (par exemple chromage). La métallisation par électrolyse peut comprendre une attaque chimique avec un bain acide, suivie d'une activation, puis d'un dépôt chimique d'une couche de métallisation, puis d'un dépôt électrolytique d'une ou plusieurs couches de métallisation.

Les pièces obtenues selon le procédé qui vient d'être décrit étant essentiellement exemptes de charges et d'additifs, aucun phénomène de dégazage ne se produit lors de l'utilisation de ces pièces dans les conditions sévères régnant dans un dispositif d'éclairage. Les pièces obtenues ont les propriétés mécaniques voulues, et leur état de surface est tel qu'il ne requiert aucune couche de préparation préalable à une métallisation.

Bien entendu, la présente invention n'est pas limitée au mode de réalisation qui a été décrit, mais elle est susceptible au contraire de recevoir de nombreuses variantes comme définies dans les revendications. C'est ainsi par exemple que la composition polymère de départ peut comprendre de très faibles doses d'un agent ignifugeant, qui n'est pas considéré comme une charge ou un additif au sens de la présente invention.

## Revendications

1. Procédé de fabrication de pièces optiques pour dispositifs d'éclairage ou de signalisation de véhicules automobiles, par injection en une seule étape dans un moule d'une composition polymère, qui est une résine polyester polymère à cristal liquide (LPC), comportant les étapes suivantes :
- on chauffe la composition polymère pour qu'elle atteigne une première température prédéterminée d'injection à laquelle elle est à l'état fondu,
- on injecte la composition polymère dans une empreinte (22) formée entre des parois (24, 26) d'un moule,
- on refroidit les parois (24, 26) du moule à une deuxième température prédéterminée de refroidissement,
- on éjecte la pièce moulée et refroidie,
le procédé étant **caractérisé en ce que** la composition polymère comporte une proportion inférieure à 1% en poids de charges et d'additifs.

2. Procédé selon la revendication 1, **caractérisé en ce que** la première température prédéterminée d'injection est comprise entre 320 °C et 360 °C.

3. Procédé selon la revendication 1, **caractérisé en ce que** la deuxième température prédéterminée de refroidissement est comprise entre 150 °C et 250 °C.

4. Procédé selon la revendication 3, **caractérisé en ce que** la deuxième température prédéterminée de refroidissement est voisine de 220 °C.

5. Procédé selon l'une des revendications 1 à 4, **caractérisé en ce qu'**il comporte, directement après l'étape d'éjection de la pièce moulée et refroidie, l'étape supplémentaire de métallisation d'une surface de la pièce.

6. Procédé selon la revendication 5, **caractérisé en ce que** l'étape de métallisation est réalisée par une évaporation sous vide.

7. Procédé selon la revendication 5, **caractérisé en ce que** l'étape de métallisation est réalisée par une pulvérisation cathodique.

8. Procédé selon la revendication 5, **caractérisé en ce que** l'étape de métallisation est réalisée par une électrolyse.

9. Procédé selon la revendication 8, **caractérisé en ce que** l'électrolyse comporte une attaque chimique suivie d'une activation, puis d'un dépôt chimique d'une couche de métallisation, puis d'un dépôt électrolytique d'une ou plusieurs couches de métallisation.

10. Procédé selon l'une quelconque des revendications précédentes, **caractérisé en ce que** la composition polymère est une résine polyester polymère à cristal liquide (LCP) comportant une proportion inférieure à 1% en poids de charges minérales ou fibreuses ou d'additifs.

## Patentansprüche

1. Verfahren zur Herstellung von optischen Teilen für Kraftfahrzeugbeleuchtungsoder -signalgebungsvorrichtungen durch Einspritzen einer aus einem Polyesterharz aus flüssigkristallinen Polymeren (LCP) bestehenden Polymermischung in eine Gussform in einem einzigen Arbeitsgang, das die folgenden Schritte umfasst:
- Erwärmen der Polymermischung, damit diese eine erste vorbestimmte Einspritztemperatur erreicht, bei er sie sich in geschmolzenem Zustand befindet,
- Einspritzen der Polymermischung in eine Kavität (22), die zwischen den Wänden (24, 26) einer Gussform gebildet ist,
- Kühlen der Wände (24, 26) der Gussform auf eine zweite vorbestimmte Kühltemperatur,
- Auswerfen des abgekühlten Formteils,
wobei das Verfahren **dadurch gekennzeichnet ist, dass** die Polymermischung einen Anteil von weniger als 1 Gew.-% Füllstoffe und Additive enthält.

2. Verfahren nach Anspruch 1,
**dadurch gekennzeichnet, dass** die erste vorbestimmte Einspritztemperatur 320°C bis 360°C beträgt.

3. Verfahren nach Anspruch 1,
**dadurch gekennzeichnet, dass** die zweite vorbestimmte Kühltemperatur 150°C bis 250°C beträgt.

4. Verfahren nach Anspruch 3,
**dadurch gekennzeichnet, dass** die zweite vorbestimmte Kühltemperatur bei etwa 220°C liegt.

5. Verfahren nach einem der Ansprüche 1 bis 4,
**dadurch gekennzeichnet, dass** es unmittelbar nach dem Schritt des Auswerfens des abgekühlten Formteils den zusätzlichen Schritt des Metallisierens einer Oberfläche des Formteils umfasst.

6. Verfahren nach Anspruch 5,
**dadurch gekennzeichnet, dass** der Schritt des Metallisierens durch Verdampfen im Vakuum erfolgt.

7. Verfahren nach Anspruch 5,
**dadurch gekennzeichnet, dass** der Schritt des Metallisierens durch Kathodenzerstäubung erfolgt.

8. Verfahren nach Anspruch 5,
**dadurch gekennzeichnet, dass** der Schritt des Metallisierens durch Elektrolyse erfolgt.

9. Verfahren nach Anspruch 8,
**dadurch gekennzeichnet, dass** die Elektrolyse ein Beizen umfasst, gefolgt von einer Aktivierung, einer chemischen Abscheidung einer Metallisierungsschicht und schließlich einer elektrolytischen Abscheidung einer oder mehrerer Metallisierungsschichten.

10. Vorrichtung nach einem der vorhergehenden Ansprüche,
**dadurch gekennzeichnet, dass** die Polymermischung ein Polyesterharz aus flüssigkristallinen Polymeren (LCP) ist, das einen Anteil von weniger als 1 Gew.-% mineralische Füllstoff oder Faserfüllstoffe oder Additive enthält.

## Claims

1. A method of making optical components for lighting or indicating apparatus for motor vehicles, by injecting in a single step, into a mould, a polymeric composition which is a liquid crystal polymeric polyester resin (LCP), the method comprising the following steps:
- the polymer composition is heated so that it reaches a predetermined first or injection temperature in which it is in the melted state,
- the polymer composition is injected into a formed die (22) between walls (24, 26) of a mould,
- the walls (24, 26) of the mould are cooled to a predetermined second or cooling temperature,
- the moulded and cooled component is ejected,
the method being **characterised in that** the polymer composition includes a proportion, less than 1% by weight, of fillers and additives.

2. A method according to Claim 1, **characterised in that** the predetermined first or injection temperature is in the range between 320°C and 360°C.

3. A method according to Claim 1, **characterised in that** the predetermined second or cooling temperature is in the range between 150°C and 250°C.

4. A method according to Claim 3, **characterised in that** the predetermined second or cooling temperature is close to 220°C.

5. A method according to one of Claims 1 to 4, **characterised in that** it includes, directly after the step of ejecting the moulded and cooled component, the additional step of metallising a surface of the component.

6. A method according to Claim 5, **characterised in that** the metallising step is carried out by evacuation under a vacuum.

7. A method according to Claim 5, **characterised in that** the metallising step is carried out by cathodic powder deposition.

8. A method according to Claim 5, **characterised in that** the metallising step is performed by electrolysis.

9. A method according to Claim 8, **characterised in that** the electrolysis comprises a chemical attack followed by activation, then chemical deposit of a metallising layer, and then electrolytic deposition of one or more metallising layers.

10. A method according to any one of the preceding Claims, **characterised in that** the polymer composition is a liquid crystal polymeric polyester resin (LCP) containing a proportion, less than 1% by weight, of mineral or fibrous fillers or of additives.
